# EUROPÄISCHE PATENTSCHRIFT

(11) **EP 3 006 602 B1**
(45) Veröffentlichungstag und Bekanntmachung des Hinweises auf die Patenterteilung: **12.04.2017**
(21) Anmeldenummer: 14188227.4
(22) Anmeldetag: 09.10.2014
(51) Int. Cl.: C23G 5/00, F01D 25/00

(54) **Verfahren zur Reinigung von Turbinenschaufeln**
Method for cleaning turbine blades
Procédé destiné au nettoyage d'aubes de turbines

(43) Veröffentlichungstag der Anmeldung: 13.04.2016
(73) Patentinhaber: Airbus DS GmbH, 82024 Taufkirchen (DE)
(72) Erfinder: Schwarting, Walter, 26127 Oldenburg (DE)
(74) Vertreter: Marschall, Stefan

(56) Entgegenhaltungen:
- EP-A2- 2 192 209
- DE-A1-102013 009 843
- US-A1- 2005 035 085

## Beschreibung

Die Erfindung betrifft ein Verfahren zur Reinigung von Turbinenschaufeln von einer Verschmutzung durch Siliziumdioxid, SiO₂, das in einem in einem Hochvakuumofen bei erhöhter Temperatur trocken ablaufenden Vakuumprozess durchgeführt wird und bei dem zumindest ein Teil des auf den zu reinigenden Turbinenschaufeln befindlichen Siliziumdioxids mittels eines reduzierend wirkenden Gases entfernt wird.

Flugtriebwerke von Düsenflugzeugen werden beim Durchfliegen von Vulkanaschewolken mit Partikeln beaufschlagt, wobei die vom Wind getragenen Staubteilchen eines Vulkanauswurfs im Wesentlichen aus Siliziumdioxid, SiO₂, bestehen. Während im Bereich der Luftansaugung, des sogenannten Fans, und der anschließenden Verdichtung, d.h. des Kompressors, trotz einer Temperaturerhöhung der Verbrennungsluft keine Belastungen durch diese Partikel auftreten, wird die durch Verbrennungsgase angetriebene Turbine in ihrem typischen Temperaturintervall bis zu 2200°C durch schmelzende SiliziumdioxidPartikel signifikant thermisch belastet.

Die Grundwerkstoffe für Turbinenschaufeln sind typischerweise Sonderlegierungen auf der Basis von Chrom und Nickel mit besonderer Eignung für Hochtemperatur-Anwendungen, die mit einer Innenkühlung und/oder mit einer äußeren Filmkühlung gekühlt werden. In wesentlichen aber wird das Basismaterial der Turbinenschaufeln thermisch dadurch geschützt, dass eine dünne keramische Oberflächenbeschichtung mit einer nur sehr geringen Wärmeleitfähigkeit auf der chemischen Basis von Zirkoniumdioxid, ZrO₂, mit einem Zusatz von Vanadiumoxid, V₂O₅, in einer Dicke von etwa 0,2 mm aufgebracht wird. Diese säulenartig aufgebaute Isolationsschicht saugt sich förmlich mit dem in Form schmelzflüssiger Tröpfchen vorliegenden Siliziumdioxid voll. Durch die so entstehende SiO₂-Füllung aber geht der sehr wichtige Effekt der ZrO₂/V₂O₅-Säulen als Wärmeisolator zum großen Teil verloren. Mit der erhöhten Wärmebelastung des Basismaterials entsteht ein hohes Risiko mechanischen Versagens für die Turbinenschaufeln, folglich für das Triebwerk und damit für das gesamte Flugzeug. Solcherart kontaminierte Turbinenschaufeln werden unbrauchbar und müssen mit einer neuen Beschichtung versehen werden. Dies geschieht bei den derzeit bekannten Verfahren dadurch, dass in einem Beizverfahren eine komplette Entschichtung durchgeführt und die entfernte Schicht anschließend auf dem Basismaterial wieder neu aufgebaut wird.

So ist aus der DE 600 15 251 T2 Verfahren der eingangs genannten Art bekannt geworden, bei dem in einem radikalen Beizverfahren die Entfernung einer dichten keramischen Beschichtung in Form einer Wärmebarriereschicht (TBC) von der Oberfläche eines Gegenstandes, der mindestens einen Vertreter aus der Gruppe Al, Ti, Cr, Zr und deren Oxiden als gasförmige Verbindung umfasst, durch eine komplette Entschichtung der Oberfläche des Gegenstandes erfolgt und die entfernte Oxidschicht anschließend auf dem Basismaterial wieder neu aufgebaut wird. Als Reduktionsgas kommt bei diesem bekannten Verfahren ein mit Fluorwasserstoffgas angereichertes Wasserstoffgas zum Einsatz. Auch bei den darüber hinaus aus der WO 20091 049 637 A1, der WO 20061 061 338 A1 und der DE 10 2005 032 685 B4 bekannten Verfahren wird eine solche komplette Entschichtung durchgeführt und anschließend die entfernte Oxidschicht auf dem Basismaterial wieder neu aufgebaut, wobei in all diesen bekannten Fällen mit Halogenionen angereicherte Prozessgase eingesetzt werden.

Weiterer Stand der Technik ist aus der EP 2 192 209 A2 und der US 2005/0035085 A1 bekannt.

Der Erfindung liegt die Aufgabe zugrunde, ein Verfahren der eingangs genannten Art so auszubilden, dass es möglich ist, die Siliziumdioxid-Füllung aus der ZrO₂/V₂O₅-Beschichtung schonend zu entfernen, indem nur das hinzugekommene, kontaminierend wirkende Siliziumdioxid entfernt und die Turbinenschaufeln auf diese Weise zu regenerieren. Die Erfindung löst die erste Aufgabe durch ein Verfahren der eingangs genannten Art, bei dem das zu entfernende Siliziumdioxid, SiO₂, durch das reduzierend wirkende und aus Wasserstoffgas, H₂, oder Kohlenmonoxid, CO, bestehende Gas, das einen Mindest-Anteil an H₂O bzw. CO₂ enthält, selektiv auf die Stufe von Silizium-Monoxid, SiO, reduziert und im Vakuum verdampft und gasförmig abgepumpt wird, wobei die Verweildauer der Turbinenschaufeln im Hochvakuumofen bis zum Zeitpunkt einer deutlichen Abnahme der SiO-Konzentration gewählt wird. Der Zustand der keramischen ZrO₂/V₂O₅-Beschichtung wird hierbei nicht beeinflusst.

Die Erfindung bietet den Vorteil der Regenerierung von Turbinenschaufeln anstelle eines kompletten Ersatzes oder einer Aufbereitung durch Entschichten und anschließendes Neubeschichten. Sie macht von der Tatsache Gebrauch, dass alternativ zu den bekannten 'nass' ablaufenden chemischen Reduktions-Prozessen auch eine 'trocken' ablaufende chemische Reduktion der Metalloxide möglich ist. Dies kann auf zwei Arten erfolgen, und zwar entweder durch eine thermische Zersetzung der Metalloxide bei ausreichend hoher Temperatur und bei sehr geringen Sauerstoff-Partialdrücken, die unterhalb der Reduktions-Oxidations-Gleichgewichts-bedingungen (REDOX) liegen, oder aber wie es die erfindungsgemäße Lösung vorsieht, mittels einer reduzierenden, aus H2 oder CO bestehenden Atmosphäre bei hoher Temperatur und ausreichend geringen und somit ebenfalls die REDOX-Gleichgewichtsbedingungen unter-schreitenden Produktanteilen an Oxidantien, wie Wasser, H2O, bzw. Kohlendioxid, CO2.

Nachfolgend soll die Erfindung anhand eines in der Zeichnung dargestellten Ausführungsbeispiels näher erläutert werden. Es zeigen:
- Fig. 1: eine prinzipielle Darstellung einer Anordnung zur Reinigung von Turbinenschaufeln,
- Fig. 2: ein Diagramm, in dem die Reduktions-Oxidations (REDOX) - Gleichgewichte der Systeme H2/H2O und CO/CO2 dargestellt sind, und
- Fig. 3: ein Diagramm der Standard-Bildungsenthalpien der beteiligten Oxide Zr05, V205, Si02 und SiO.

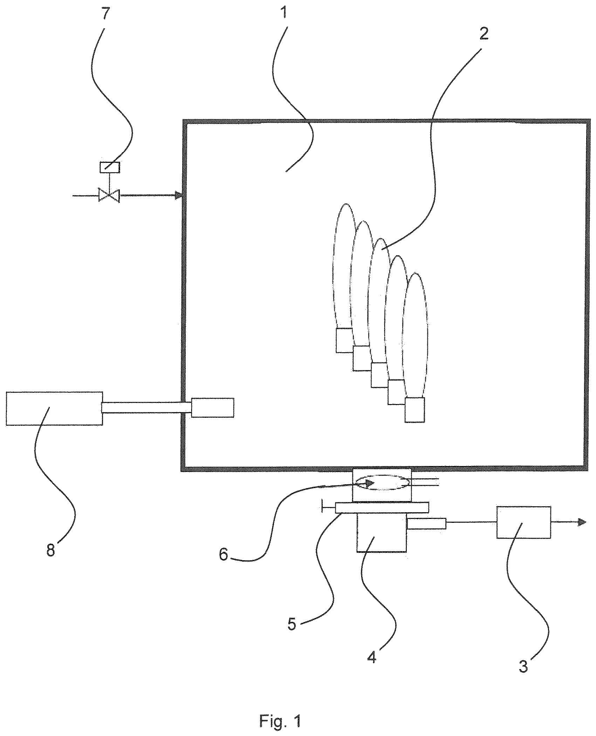

Die in Fig. 1 dargestellte Anordnung zur Reinigung von Turbinenschaufeln umfasst einen elektrisch beheizten Hochvakuumofen 1, in dem eine Reihe zu reinigender Turbinenschaufeln 2 angeordnet ist. Der Hochvakuumofen 1 ist über ein aus einer Vorpumpe 3 und eine Turbomolekularpumpe 4 mit einem regulierbaren Drosselventil 5 und einem wassergekühlten Baffle 6 bestehendes Vakuumsystem evakuierbar. Ferner ist der Ofen 1 mit einem Gaseinlaßventil 7 für das Gas Wasserstoff H2 sowie mit einem Massenspektrometer 8 ausgerüstet.

In diesem Hochvakuumofen 1 wird das auf den zu reinigenden Turbinenschaufeln 2 befindliche Siliziumdioxid bei erhöhter Temperatur selektiv reduziert. Der Begriff "selektiv" bedeutet hier, dass unter den beteiligten Oxiden SiO2, ZrO2 und V2O5 ausschließlich das SiO2 zu dem im Vakuum flüchtigen Produkt SiO, Siliziummonoxid, reduziert wird. Der Ablauf der Reduktion eines Metalloxids ist sowohl energetisch als auch durch die Lage des chemischen Gleichgewichts aufgrund der beteiligten Stoffmengen bestimmt. Einerseits muss dabei die Aktivierung der chemischen Reduktion des Oxids erfolgen, zugleich muss aber eine unerwünschte Rückreaktion, d.h.,. eine Oxidation durch das Reduktions-Produkt, verhindert werden.

Im Fall der SiO2-kontaminierten Turbinenschaufeln 2 liegen auf dem Basismaterial, einer sogenannten Nickel-Basis-Superlegierung, drei Metalloxide nebeneinander vor: das ZrO2 mit einem Zusatz von V2O5 als keramischer Isolationsschicht und das SiO2 der Vulkanasche. Es soll aber lediglich das SiO2 reduziert werden, und zwar nicht vollständig bis zum elementaren Silizium, sondern nur partiell bis zum Zustand des nur im Vakuum beständigen Siliziummonoxids, SiO, das gasförmig und somit flüchtig ist.

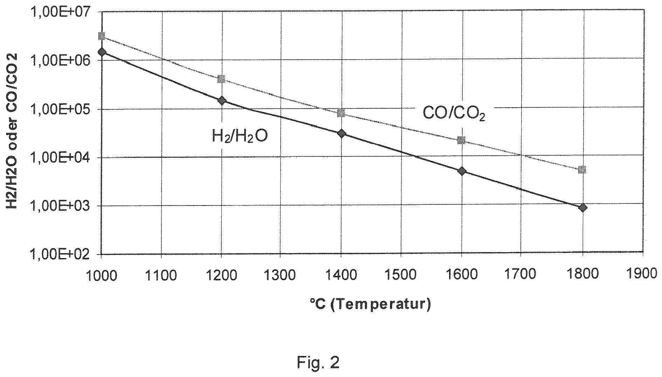

Das Verfahren nutzt die Möglichkeiten der selektiven Reduktion entweder mittels Wasserstoff, H2, mit einer geringen, aber kontrollierten Anreicherung von Wasser, H2O, unter Ausschluss von Kohlendioxid, CO2, oder alternativ mittels Kohlenmonoxid, CO, mit einer kontrollieren Anreicherung von Kohlendioxid, CO2, unter Ausschluss von Wasser, H2O. Durch diese Maßnahme wird die unerwünschte Reduktion der thermisch isolierenden keramischen Beschichtung unterbunden. In Fig. 2 ist dabei in einem Diagramm das Reduktionsgleichgewicht der Systeme H2/H2O und CO/CO2 dargestellt, wobei die obere Linie das REDOX-Gleichgewicht des Systems CO/CO2 und die untere Linie das REDOX-Gleichgewicht des Systems H2/H2O zeigt.

Im Beispiel für die SiO2-Reduktion mit Wasserstoff wird in den Hochvakuumofen 1 über das Gaseinlassventil 7 ein reduzierendes Gas, im Fall des in der Figur dargestellten Ausführungsbeispiels sehr reiner Wasserstoff, mit einer kontrolliert geringen Verunreinigung an Oxidantien wie Sauerstoff,02, und Wasser, H2O, eingelassen. Es erfolgt nun bei hinreichender Ofentemperatur die chemische Reduktion des Siliziumdioxids, SiO 2, zu flüchtigem Siliziummonoxid, SiO, sowie zu Produktwasser, H2O, gemäß der Reaktionsgleichung:

SiO2 + H2 → SiO + H2O

Als Reaktionsprodukt tritt neben dem SiO auch Produktwasser, H2O, auf, wobei es sich bei beiden Reaktionsprodukten um gasförmige, also flüchtige Stoffe, handelt.

Das dem im Ofen eingesetzte reduzierenden Gas beinhaltet bei Ablauf der Reduktion nun zunehmend höhere Konzentrationen der Produkte SiO und H2O. Bei einer maximal erlaubten Konzentration an Wasser im Wasserstoff der Hochvakuumofen-Füllung wird das SiO2-REDOX-Gleichgewicht erreicht und der Reduktionsprozess aufgrund der Rückreaktion zum Oxid wird gestoppt. Dieser Wert darf also nicht überschritten werden. Außerdem ist auch das gebildete Produkt SiO aus dem System zu entfernen. Daher muss der Wasserstoffgas-Durchsatz kontrolliert werden.

Zusammengefasst ist durch die Vorgabe eines zunächst großen H2/H2O-Verhältnisses im Wasserstoff die Reduktion des SiO2 möglich, aber andererseits die Reduktion der anderen beteiligten Oxide ZrO2 oder V2O5 ausgeschlossen, denn die Bedingungen der jeweiligen REDOX-Gleichgewichte werden nicht erreicht. Da sich jedoch Produktwasser im Laufe der Zeit im Wasserstoff anreichert und das H2/H2O-Verhältnis kleiner wird, muss ein bestimmter minimaler Wert der H2/H2O-Relation durch die permanente Zugabe von Wasserstoff kontrolliert werden. Damit wird ein Überschreiten der SiO2-Reduktionsgleichgewichtsbedingung vermieden. Der zugeführte Wasserstoff wird in dem Maße - unter Druck-Konstanz - zugeführt, wie das gebildete Produktgas abgepumpt wird. Durch eine dynamische Verdünnung der Ofenatmosphäre wird die maximal erlaubte Konzentration der Produkte H2O und SiO kontrolliert und diese werden gleichzeitig aus dem System entfernt.

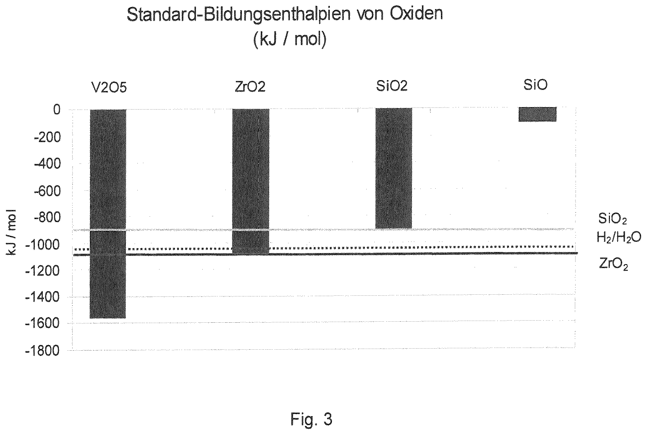

Die Standard-Bildungsenthalpien (25°C; 298K) der hier beteiligten Oxide liegen weit genug voneinander entfernt, um eine selektive Reduktion des SiO2 zu erzielen. Das in Fig. 3 dargestellte Diagramm zeigt, dass Siliziumdioxid am leichtesten zu reduzieren ist, während ZrO2 und das V2O5 stabiler sind, da sie stärker negative Standard-Bildungsenthalpien besitzen.

Die unterste Linie zeigt in dieser Figur die REDOX-Gleichgewichtslage des ZrO2 an, die nicht unterschritten werden darf. Die oberste Linie zeigt die Lage des REDOX-Gleichgewichts des SiO2. Mit der mittleren, punktierten Linie wird die optimale Lage des H2/H2O-Verhältnisses angedeutet. Die Bildungsenthalpien sind jedoch temperaturabhängig; die Werte steigen an, d.h., die Zahlen mit negativem Vorzeichen werden kleiner.

Jedem der Oxide ist bei jeder Gleichgewichts-Temperatur eine bestimmtes H2/H2O -Verhältnis zugeordnet. Wie die nachfolgende Tabelle 1 für das SiO2 zeigt, darf das molare H2/H2O-Verhältnis nicht unterschritten werden.

Außerdem entspricht dem jeweiligen H2/H2O -Verhältnis ein relativer Konzentrationswert von Wasser in Wasserstoff, angegeben in ,vpm', der nicht überschritten werden darf.

**Tabelle 1 (für SiO2)**

| °C | H2/H20 | vpm H2O in H2 |
|---|---|---|
| Temperatur | Molverhältnis | Konzentration |
| 1000 | 1,5E+6 | 9E-1 |
| 1200 | 1,5E+5 | 9E0 |
| 1400 | 3E4 | 6E+1 |
| 1600 | 5E3 | 4E2 |
| 1800 | 9E+2 | 1,5E+3 |

Um das ZrO2 nicht zu reduzieren, soll der Wasserstoff eine minimale Konzentration an Wasser nicht unterschreiten. Der mögliche Rest-Sauerstoffgehalt eines Wasserstoff-Druckgases kann stöchiometrisch direkt in Wasser umgerechnet werden und mit zugesetztem Wasser auf den erforderlichen Gesamt-Wasser-Konzentrationswert eingestellt werden, der sich aus der Temperaturabhängigkeit der Reduktion gemäß Tabelle 2 ergibt.

Ein optimaler Wert für das H2/H2O Molverhältnis des Reduktionsgases liegt also grundsätzlich zwischen den dargestellten temperaturabhängigen Werten der beiden Tabellen, aber unbedingt knapp oberhalb der Konzentrationswerte (vpm Wasser) des ZrO2 beziehungsweise knapp unterhalb der Werte für das Molverhältnis (H2/H2O) beim ZrO2.

**Tabelle 2 (für ZrO2)**

| °C | H2/H20 | vpm H2O in H2 |
|---|---|---|
| Temperatur | Molverhältnis | Konzentration |
| 1000 | 3E9 | 7E-4 |
| 1200 | 8E7 | 2E-2 |
| 1400 | 4E6 | 5E-1 |
| 1600 | 5E5 | 4E0 |
| 1800 | 8E+4 | 2,5E+1 |

Da sich im Laufe der Zeit die Menge an SiO2 verringert, nehmen die Raten an freigesetztem SiO und die des Produktwassers gleichzeitig ab. Um beides, den Endpunkt der Reduktion und das Vorhandensein von restlichem SiO2 zu erfassen, ist eine analytische Kontrolle vorgesehen, bei der die genannten Stoff-Konzentrationen an SiO und H2O in der Ofenatmosphäre gemessen werden. Hierfür ist eine instrumentelle Gasanalyse mittels des Massenspektrometers 8 im Vakuumofen besonders geeignet. Vor Beginn der Reduktion lässt sich damit das Vakuum hinsichtlich seiner Restgas-Zusammensetzung auf störende Sauerstoff- und Wasser-Konzentration z.B. aufgrund von Lecks und Ausgasung beurteilen. Während der laufenden Reaktion mit Wasserstoffgas kann die gesamte Produktgas-Konzentration: H2O, 18 amu, SiO, 44 amu, und Si, 28 amu [amu = atomic mass units] verfolgt werden und durch Änderung entweder des Drucks oder der eingelassenen Menge des Reduktionsgases auf erforderliche Werte gesetzt werden.

Im Falle des alternativen Reduktionsgases Kohlenmonoxid, CO, sind die gebildeten Reduktionsprodukte SiO und CO2. Da die Masse des CO2, Kohlendioxid, mit 44 amu auf dem gleichen Wert liegt wie die des SiO, wird ein Summenwert der beiden überlagerten Massen-Peak-Intensitäten abgebildet, so dass bei abnehmender SiO2-Menge gegen Ende der Reduktion sich die Intensität der Masse 44 amu entsprechend stark verringert.

Für die Reduktion mit CO gelten die folgenden Gleichgewichtswerte:

**Tabelle 3 (für SiO2)**

| °C | CO/CO2 |
|---|---|
| Temperatur | Molverhältnis |
| 1000 | 3E6 |
| 1200 | 3, 5E5 |
| 1400 | 7, 5E4 |
| 1600 | 2, 5E4 |
| 1800 | 5E3 |

**Tabelle 4 (für ZrO2)**

| °C | CO/CO2 |
|---|---|
| Temperatur | Molverhältnis |
| 1000 | 3, 5E9 |
| 1200 | 1E8 |
| 1400 | 9E6 |
| 1600 | 2, 5E6 |
| 1800 | 1, 5E5 |

Wichtig ist im Zusammenhang mit diesem Vorgang ist, dass der Hochvakuumofen 1 zur Regulierung der Reduktionsgas-Einlassrate ein Präzisions-Hochvakuum-Regulierventil als Gaseinlassventil 7 aufweist. Mit dem Massenspektrometer 8 wird zugleich die Zusammensetzung der Ofenatmosphäre überwacht. Das wassergekühlte Adoptions-Schild oder Baffle 6 ist dabei dem Reduzierventil 5, welches der Drosselung der Saugleistung einer Turbomolekularpumpe 4 dient, vorgeschaltet, um bereits hier Siliziummonoxid kalt niederzuschlagen und damit einer Beschichtung der Rotor- und Statorblätter der Turbomolekularpumpe 4 vorzubeugen.

Bei einem Verfahren zur Reinigung von Turbinenschaufeln von einer Verschmutzung durch Siliziumdioxid SiO₂ wird in einem trocken ablaufenden Vakuumprozess, der in einem Hochvakuumofen erfolgt, das auf den zu reinigenden Turbinenschaufeln befindliche Siliziumdioxid bei erhöhter Temperatur selektiv reduziert, indem dem Hochvakuumofen ein aus Wasserstoffgas oder Kohlenmonoxid bestehendes reduzierend wirkendes Gas zugeführt wird. Die Temperatur im Hochvakuumofen beträgt wenigstens etwa 1000 Grad Celsius, und die Verweildauer der Turbinenschaufeln im Hochvakuumofen wird über die Abnahme der massenspektrometrisch analysierten SiO-Konzentration bestimmt. Der elektrisch beheizbare Hochvakuumofen ist mittels eines Vakuumsystems, das aus einer Vorpumpe sowie einer Turbomolekularpumpe mit einem regulierbaren Drosselventil und einem wassergekühlten Baffle besteht, evakuierbar. Ferner ist ihm über ein Präzisions-Hochvakuum-Regulierventil das reduzierend wirkende Gas zuführbar und er ist mit einem Massenspektrometer ausgerüstet.

## Patentansprüche

1. Verfahren zur Reinigung von Turbinenschaufeln von einer Verschmutzung durch Siliziumdioxid, SiO₂, das in einem in einem Hochvakuumofen bei erhöhter Temperatur trocken ablaufenden Vakuumprozess durchgeführt wird und bei dem zumindest ein Teil des auf den zu reinigenden Turbinenschaufeln befindlichen Siliziumdioxids mittels eines reduzierend wirkenden Gases entfernt wird, **dadurch gekennzeichnet, dass** das zu entfernende Siliziumdioxid, SiO₂, durch das reduzierend wirkende und aus Wasserstoffgas, H₂, oder Kohlenmonoxid, CO, bestehende Gas, das einen Mindest-Anteil an H₂O bzw. CO₂ enthält, selektiv auf die Stufe von Silizium-Monoxid, SiO, reduziert und im Vakuum verdampft und gasförmig abgepumpt wird, wobei die Verweildauer der Turbinenschaufeln (2) im Hochvakuumofen (1) bis zum Zeitpunkt einer deutlichen Abnahme der SiO-Konzentration gewählt wird.

2. Verfahren nach Anspruch 1, **dadurch gekennzeichnet, dass** das reduzierend wirkende Gas aus Wasserstoffgas, H₂, besteht, das einen Mindest-Anteil des oxidierend wirkenden Stoffes H₂O enthält und das auf den maximal erlaubten Konzentrationswert dieser Reaktionsprodukte durch Kontrolle der Gasdurchsatz-Rate mittels massenspektrometrischer Erfassung überwacht wird.

3. Verfahren nach Anspruch 1, **dadurch gekennzeichnet, dass** das reduzierend wirkende Gas aus Kohlenmonoxid, CO, besteht, das einen Mindest-Anteil des oxidierend wirkenden Stoffes CO₂ enthält und auf den maximal erlaubten Konzentrationswert dieser Reaktionsprodukte durch Kontrolle der Gasdurchsatz-Rate mittels massenspektrometrischer Erfassung überwacht wird.

4. Verfahren nach einem der Ansprüche 1 bis 3, **dadurch gekennzeichnet, dass** die Temperatur im Hochvakuumofen (1) wenigstens 1000 Grad Celsius beträgt.

5. Verfahren nach einem der Ansprüche 1 bis 4, **dadurch gekennzeichnet, dass** die Verweildauer der Turbinenschaufeln (2) im Hochvakuumofen (1) wenigstens bis zum Zeitpunkt der deutlichen Abnahme der SiO-Konzentration (44 amu) beträgt (Massenspektrometer).

## Claims

1. A method for cleaning contaminating silicon dioxide, SiO₂, from turbine blades, said method being carried out in a dry vacuum process that takes place at elevated temperature inside a high-vacuum furnace and in which at least some of the silicon dioxide on the turbine blades that are to be cleaned is removed by means of a gas with reducing action, **characterised in that** the silicon dioxide, SiO₂, to be removed is reduced selectively to the silicon monoxide, SiO, stage by the gas with reducing action consisting of hydrogen gas, H₂, or carbon monoxide, CO, which contains a minimum quantity of H₂O or CO₂, respectively, and is then vaporised in a vacuum and pumped out in gas form, wherein the dwell time of the turbine blades (2) in the high-vacuum furnace (1) is selected up to the time when the SiO concentration drops significantly.

2. The method according to claim 1, **characterised in that** the gas with reductive action consists of hydrogen gas, H₂, which contains a minimum fraction of H₂O with oxidising action and is monitored for the maximum permitted concentration value of these reaction products by monitoring the gas flow rate by means of mass spectrometer analysis.

3. The method according to claim 1, **characterised in that** the gas with reducing action consists of carbon monoxide, CO, which contains a minimum fraction of CO₂ with oxidising action and is monitored for the maximum permitted concentration value of these reaction products by checking the gas flow rate by means of mass spectrometer analysis.

4. The method according to one of claims 1 to 3, **characterised in that** the temperature in the high-vacuum furnace (1) is at least 1000 degrees Celsius.

5. The method according to one of claims 1 to 4, **characterised in that** the dwell time of the turbine blades (2) in the high-vacuum furnace (1) is at least until the time when the SiO concentration (44 AMU) drops significantly (mass spectrometer).

## Revendications

1. Procédé destiné à nettoyer des aubes de turbine d'un encrassement par dioxyde de silicium, SiO₂ que l'on réalise par un processus sous vide se déroulant à sec, à température élevée dans un four à vide poussé et lors duquel on retire au moins une partie de l'oxyde de silicium se trouvant sur les aubes de turbine qui doivent être nettoyées au moyen d'un gaz à effet réducteur, **caractérisé en ce que** le dioxyde de silicium, SiO₂ qui doit être retiré est réduit sélectivement à la phase de monoxyde de silicium, SiO par le gaz à effet réducteur et constitué de gaz hydrogène, H₂ ou de monoxyde de carbone, CO qui contient une part minimale de H₂O ou de CO₂ et évaporé par vide et pompé sous forme gazeuse, la durée de séjour des aubes de turbine (2) dans le four à vide poussé (1) étant sélectionné jusqu'à l'instant d'une nette diminution de la concentration en SiO.

2. Procédé selon la revendication 1, **caractérisé en ce que** le gaz à effet réducteur est constitué de gaz hydrogène, H₂ qui contient une part minimale de la substance H₂O à effet oxydant et **en ce qu'**il est supervisé à la valeur de concentration maximale autorisée desdits produits de réaction par contrôle du taux du débit de gaz par détection au spectromètre de masse.

3. Procédé selon la revendication 1, **caractérisé en ce que** le gaz à effet réducteur est constitué de monoxyde de carbone, CO qui contient une part minimale de la substance CO₂ à effet oxydant et **en ce qu'**il est supervisé à la valeur de concentration maximale autorisée desdits produits de réaction par contrôle du taux du débit de gaz par détection au spectromètre de masse.

4. Procédé selon l'une quelconque des revendications 1 à 3, **caractérisé en ce que** la température dans le four à vide poussé (1) est d'au moins 1000 degrés Celsius.

5. Procédé selon l'une quelconque des revendications 1 à 4, **caractérisé en ce que** la durée de séjour des aubes de turbine (2) dans le four à vide poussé s'étend au moins jusqu'à l'instant de la nette diminution de la concentration en SiO (44 amu) (spectromètre de masse).
